(19) Europäisches Patentamt
European Patent Office
Office européen des brevets

(11) **EP 1 608 241 B1**

(12) **EUROPEAN PATENT SPECIFICATION**

(45) Date of publication and mention
of the grant of the patent:
**05.10.2011 Bulletin 2011/40**

(21) Application number: **04704419.3**

(22) Date of filing: **22.01.2004**

(51) Int Cl.:
*A23L 3/3418* (2006.01)      *A23L 3/3445* (2006.01)
*A23B 7/148* (2006.01)      *A23B 7/152* (2006.01)
*B65D 81/20* (2006.01)

(86) International application number:
**PCT/US2004/001667**

(87) International publication number:
**WO 2004/066758 (12.08.2004 Gazette 2004/33)**

(54) **METHOD OF PRESERVING FRESH PERISHABLES**

VERFAHREN ZUR KONSERVIERUNG VON VERDERBLICHEN WAREN

PROCEDE POUR CONSERVER DES DENREES PERISSABLES FRAICHES

(84) Designated Contracting States:
**AT BE BG CH CY CZ DE DK EE ES FI FR GB GR HU IE IT LI LU MC NL PT RO SE SI SK TR**

(30) Priority: **28.01.2003 US 442980 P**
**15.09.2003 US 503062 P**

(43) Date of publication of application:
**28.12.2005 Bulletin 2005/52**

(73) Proprietor: **CHIQUITA BRANDS, Inc**
**Cincinnati,**
**Ohio 45202 (US)**

(72) Inventor: **BELL, Laurence, D.**
**Pacific Grove, CA 93950 (US)**

(74) Representative: **Nargolwalla, Cyra et al**
**Cabinet Plasseraud**
**52, rue de la Victoire**
**75440 Paris Cedex 09 (FR)**

(56) References cited:
**EP-A- 0 356 161      EP-A- 0 414 451**
**US-A- 5 565 230      US-B1- 6 190 710**
**US-B1- 6 451 363**

• **PATENT ABSTRACTS OF JAPAN vol. 2000, no. 10, 17 November 2000 (2000-11-17) -& JP 2000 197447 A (RENGO CO LTD), 18 July 2000 (2000-07-18)**
• **PATENT ABSTRACTS OF JAPAN vol. 016, no. 329 (C-0963), 17 July 1992 (1992-07-17) -& JP 04 094641 A (NICHIREI CORP; OTHERS: 01), 26 March 1992 (1992-03-26)**

**Description**

CROSS REFERENCE TO RELATED APPLICATIONS

This application is based on and claims priority from U.S. Provisional Application No. 60/442,980, filed January 28, 2003, and U.S. Provisional Application No. 60/503,062, filed September 15, 2003, both of which are incorporated herein by reference.

BACKGROUND OF THE INVENTION

The shelf life of most perishables, including respiring produce, non-respiring prepared or cooked perishables and raw or cooked muscle foods can be extended by the application of various gas/vapor mixtures. These mixtures are commonly referred to as Modified or Controlled Atmospheres (MA/CA). Other acronyms include MAP, which refers to packaging applications, as contrasted with storage or transportation applications.

Where microbial spoilage is the primary cause of reduced shelf life, microbial-static and microbial-cidal gases and vapors (such as $CO_2$ are effective agents for extending the microbial shelf life of such perishables. However, complications arise when the most effective levels of these agents also cause damage to the color, flavor, odor and texture of the perishable of interest or to one of the perishables in a mixture of interest. Consequently, these agents are frequently not used or are used at sub-optimal levels resulting in shorter shelf life. Shorter shelf life frequently results in higher production and distribution costs along with higher spoilage losses and increased potential for product failure at the end user (i.e., a customer unhappy with the product).

Food safety issues have also been responsible for the limited application of effective (low oxygen) MA/CA mixtures for those foods that are susceptible to the growth of *Clostridium botulinum* and the resulting food-borne illness termed botulism.

US 5 565 230 discloses a process for packaging cherries, i.e. whole fruits, using a low barrier gas permeable plastic film. The maximum concentration of antimicrobial gas used in is about 25 %.

JP 2000 197447 discloses a method for holding the post-harvest freshness of a vegetable or fruit, such as strawberry or broccoli. This process comprises increasing the concentration of carbon dioxide in the container to the maximum value of 25 - 70 %, and then reducing the concentration of the carbon dioxide so that 40 to 70 % of the maximum value will be held after 48 hours. This document does not contemplate using this method for packaging fresh cut produce.

EP 0 414 451 discloses a package for a perishable fruit or vegetable such as lettuce, cabbage, carrots and apples but does not mention packaging fresh cut produce.

US 6451363 discloses a method for the preservation, packaging and shipping of whole fruits, vegetables and flowers, comprising introduction of small amounts of nitric oxide into the modified atmosphere at the time the package is sealed. The package may contain carbon dioxide at a level above ambient atmosphere. The maximum carbon dioxide concentration used in the examples is 13 %.

EP 0 356 161 discloses a microporous film for retaining freshness of vegetables and fruits.

JP 04 094641 discloses a method for preserving strawberries by sealing strawberries and a water absorbing agent in an atmosphere containing 2 to 20 % by weight of carbon dioxide.

US 6 190 710 discloses a water vapour permeable packaging material and a method for packaging a produce product therein, said method comprising enclosing the produce in the packaging material to thereby provide an environment for the produce which comprises 0.5 % to 17 % of carbon dioxide.

SUMMARY OF THE INVENTION

The present invention relates to a process for packaging perishable food items, particularly fresh cut fruit, comprising the steps of: (a) placing fresh cut food pieces in a package at least a portion of which is gas permeable; and (b) adding an antimicrobial gas (preferably carbon dioxide) into said package at a level of from 30% 100% (most preferably from 75% to 100%) of the atmosphere contained within the package;

wherein said package has a permeability such that the atmosphere in the package equilibrates with the atmospheric gas composition in 1 to 7, preferably about 2 to about 4, days from the time the antimicrobial gas is added to the package, at from -2,2°C (28°F) to 100°C (212°F) preferably from 0°C (32°F) to 10°C-(50°F).

In addition, the present invention relates to a package for holding fresh cut fruit during storage and/or transportation, at least a portion of which package is gas permeable, and which is structurally adapted to hold an initial level of antimicrobial gas (preferably carbon dioxide) of from 30% to 100% of the atmosphere contained within the package; and wherein said package permits the atmosphere in said package to equilibrate to no more than 20% antimicrobial gas in from 1 to 5 days at 2,2°C (28°F) to 100°C (212°F), preferably 0°C (32°) to 10°C (50°F).

## DETAILED DESCRIPTION OF THE INVENTION

The present invention relates to a novel method of preserving fresh perishables, such as fresh cut fruit, so as to retard spoilage and extend freshness. This invention extends the freshness of foods, especially fresh cut produce, by surrounding the food for a controlled (limited) time period with $CO_2$ or other antimicrobial gases or vapors at levels well in excess of the maximum levels widely accepted by those skilled in the art to be permanently damaging to the food's characteristic flavor, colour, odor or texture. The method of the present invention applies to cut produce, either packaged alone or together with any other (non-produce) food product.

The method is particularly useful with low acid fruit, such as melons (for example, watermelon, cantaloupe, honeydew, etc.), although it may also be used on virtually any other type and mixture of fruit (whole or cut), cooked, raw or fresh perishable as well. The method not only inhibits the growth of spoilage flora on the fruit, but it also inhibits the loss of flavor and texture which generally takes place with fresh cut fruit over time. The not result of this method is that fruit can have a fresh cut appearance, smell and taste for as long as 10-14 days at 7,2°C (45°F), or possibly even longer, after it is cut. This level of high quality shelf life for fresh cut fruit has been unattainable to date (without the use of preservatives) by the fresh cut fruit industry using known and available technology. This invention is typically used in conjunction with high quality raw materials and a sufficiently sanitary process that insures the initial microbial load on the perishable or fresh cut fruit is minimized.

The method is accomplished by placing the perishable fresh cut produce in a package or container or enclosure made up, in whole or in part, of microperforated, microporous or differentially gas permeable materials (for example, membranes, tray lidding, bags, master bags, refrigerated containers, controlled atmosphere (CA) storage rooms or any size enclosure that is capable of achieving and maintaining specifically defined modified atmospheric conditions (such as storage rooms, ship holds, rail cars, or ship or truck containers)) for times necessary to accomplish the benefits of the invention taught herein. As used herein, the term "package" is intended to have that broad definition. Sufficient carbon dioxide or any other antimicrobial gas or volatile material (for example, chlorine oxide, ozone, ethanol, nitrous oxide, carbon monoxide, peroxide) is introduced into the package so as to temporarily or permanently inhibit the growth and/or kill undesirable microorganisms associated with the perishable (fruit) present in the package. Carbon dioxide is preferred. Initially high levels of, for example, $CO_2$ provide significantly greater inhibition of growth and killing of spoilage microorganisms than are attainable with the same perishables stored or packaged in conventional MA or CA environments, or air. This element facilitates the present invention's ability to maintain freshness and inhibit spoilage of perishables for extended periods of time. Some gases (particularly carbon dioxide) provide additional benefits with fresh produce and fresh cut produce, such as inhibiting ethylene damage to the fruit and slowing down respiration rate thereby extending fresh odor, flavor, color and texture.

Two important findings, among others, form the underpinnings of the present invention. One is the shelf life longevity which occurs when susceptible perishables (e.g., fresh cut fruit) are exposed to high levels of antimicrobial material (e.g., $CO_2$) for a relatively short duration. The second is that temporary exposure of damage susceptible perishables to higher than recommended levels of antimicrobial volatiles results only in <u>temporary</u> damage to those perishables. The prior art would have suggested that such damage would have been permanent and, therefore, would not have contemplated such exposure.

The high levels of carbon dioxide or other antimicrobial agent may be introduced into the package or container by vacuum back flush, injection, permeation or any other suitable means. An important aspect of this invention is the use of initial levels of carbon dioxide (or other antimicrobial agent) that are above those reported to be injurious to the perishables of interest. For example, $CO_2$ levels greater than 15% on fresh produce are widely reported to cause off flavor and injury. In this invention, $CO_2$ is introduced at from about 30% to 100%, preferably from 40%, more preferably from 50%, still more preferably from 60%, up to 100%) of the atmosphere contained in the package.

Gas permeable packaging or mechanically actuated leakage or evacuation facilitates controlled release (dissipation) of the antimicrobial gas (e.g., $CO_2$) level in the package such that it equilibrates to a more typical Modified Atmospheric (or air) composition. In that way, the fruit is not kept under a high (potentially damaging) $CO_2$ atmosphere for an extended period of time, thereby minimizing damage to the perishable caused by the $CO_2$ while still damaging or inhibiting spoilage organisms and inhibiting the damaging effects of ethylene. As used herein, "equilibrates to a more typical atmospheric composition" means that the final atmospheric composition in the package approaches that of the atmosphere (especially in terms of $CO_2$ and $O_2$ levels) when compared to the initial levels (i.e., the $CO_2$ level decreases), bearing in mind that respiration of the fruit and longer term of microbial flora present may significantly affect the $CO_2$ and $O_2$ levels. For example, to allow for the dissipation of high $CO_2$ induced off-flavor prior to consumption, it is preferred (for most fresh cut fruit applications) that the atmosphere in the package start with an atmosphere of at least about 30% $CO_2$ (more preferably at least about 40% $CO_2$) and equilibrate to an atmosphere which contains no more than 25% $CO_2$ within 2 to 4 days. In general, equilibration will take from 1 to 7 days preferably 5 days or less, more preferably from 2 to 4 days, at from -2,2°C (28°F) to 100°C (212°F), preferably 0°C (32°F) to 10°C (50°F). Generally, in this application, "equilibration" of the package atmosphere is to normal atmospheric conditions. However, the packages could be placed in a storage room having a controlled atmosphere (i.e., an atmosphere different from normal atmospheric composition) in which case the packages would "equilibrate" to the content of that controlled atmosphere.

With this desired result in mind, the precise permeability of the packaging or rate of air leakage may be determined by one skilled in the art. The permeability of the package or controlled air leakage will vary depending upon, for example, the particular gases used, the mixture of perishables or identity of the fruit, fruit mix or perishables mix, the size of the package (head space), the amount and surface area of the fruit or perishables, and the net weight and surface area of the packaging material. The precise initial $CO_2$ levels and dissipation times will also typically depend, for example, on the nature of the perishables and susceptibility to $CO_2$ injury over time at a given temperature regime, the distribution time to the end user and the desired shelf life of the product.

Where higher initial $CO_2$ levels are desired, and distribution times are short or the potential for permanent damage to the perishable high, faster dissipation rates may be used; where lower initial $CO_2$ levels are used, slower dissipation rates may be used. For example, when ultra-high levels of $CO_2$ are used (e.g., 50% or higher), even short exposure periods (e.g., fast dissipation rates) of 1 or 2 days may be acceptable for conferring extended shelf life. When levels of $CO_2$ in the 30% or 40% range are used, lower dissipation rates (i.e., longer dissipation times) may be preferred.

Although the present application has been framed primarily in terms of fresh cut fruit, the method of the present invention can be used with perishables and fresh foods of any kind, and mixtures thereof. For example, applications could include fresh meat, fish and poultry or prepared meals containing a precooked entrée (meat, pasta, vegetable) with or without uncooked fresh cut fruit or other fresh produce. The present invention may also, for example, be used with packages of raw beef. In that instance, the high initial levels of $CO_2$, for example, will keep the meat from spoiling while allowing oxygen rich air to reenter the package, returning the color of the meat to the desirable red by the time of purchase, without requiring the high costs of modified atmosphere packaging currently used in meat packaging.

The preferred execution of the present invention, however, is with fresh cut fruit, such as pineapple, cantaloupe, honeydew, strawberries, grapes and/or watermelon. A preferred embodiment of the present invention, for use with such fruit, packages the fruit at an initial atmosphere which comprises at least 50% (preferably 75%) $CO_2$. That atmosphere equilibrates such that it contains from 15% to 20% $CO_2$ (preferably 16-17% $CO_2$) three days after packaging. This rate and level of equilibration has been demonstrated to result in fresh cut fruit without any significant high $CO_2$ induced off-flavor by the third day. This time period is targeted to match the normal distribution and earliest consumption window for commercially produced fresh cut fruit. It is preferred that the fruit or other perishables be surface sanitized (for example, by surface washing, irradiation, chlorine dip or the administration of heat (e.g., steam, hot water, hot air, infrared) before they are cut up or packaged in order to minimize the amount of surface flora on the fruit. When $CO_2$ (particularly high levels) is introduced it may be done at a refrigerated initial temperature, room initial temperature or warm initial temperature. Warm initial temperatures may provide some advantages because of the higher rate of microbe metabolism at such temperatures.

Most commercial producers of fresh cut fruit employ "very low barrier" micro-perforated packaging materials or other materials that facilitate a relatively high rate of gas exchange between the inside and outside of the package compared to differentially permeable "low barrier" or impermeable "barrier" type packaging materials. These very low barrier materials facilitate higher rates of entry of outside oxygen into the package and release of respiration produced $CO_2$ out of the package. This "very low barrier" packaging is designed to insure that oxygen equilibrates in then package at high enough levels to prevent an anaerobic environment and a possible botulism incident, especially with low acid type fruits (e.g., melons). The high gas permeability of these materials also prevents the buildup of excessive $CO_2$ levels that could swell the package or damage the flavor, appearance or texture of the product. This inventor's research has shown that, in general, the shelf life of most fresh cut fruit is compromised by using these very low barrier materials compared to materials that facilitate lower equilibrium oxygen levels and higher equilibrium $CO_2$ levels. Generally speaking, shelf life has been shown to decline by 20-30% in very low barrier materials compared to higher barrier materials. For fresh cut melons, for example, this translates into 6-8 days in very low barrier as compared with 8-10 days (at 72°C) (45°F) in higher barrier materials. This packaging-related decline in shelf life can be largely attributed to the inability of very low barrier packaging to retain and equilibrate to recommended beneficial levels of $CO_2$ (5-15%). This has led many experts in the industry to not use or abandon the use of active gas flushing prior to applying a very low barrier seal or lidding film to fresh cut fruit packages. In fact, there are many experts who claim that gas flushing with elevated $CO_2$ and/or lower oxygen provides no shelf life benefit for fresh cut fruit.

As illustrated in the following examples, this invention can recover the 20-30% loss of shelf life caused by the food safety requirement of using very low barrier packaging materials. Furthermore, this invention can add 40-75% additional days of shelf life at 7,2°C (45°F) using very low barrier packaging materials containing initially higher than typical levels of $CO_2$.

The significant shelf life extensions facilitated by this invention will break the "short shelf life" paradigm that the fresh cut fruit industry has been operating within to date. Longer shelf life will facilitate new, more competitive cost structures and superior products. It is expected that this invention will also facilitate similar advances in other categories of perishables where cost and quality can benefit from the methods taught herein.

Packaging and containers that can be used to practice this invention include, but are not limited to, rigid, thermoformed containers pre-made or thermoformed in-line, made from plastics such as polyvinylchloride (PVC), polystyrene, polyethylene, and polyethylene terephthalate (PET). These materials may be used alone or in composites, blends, laminates or co-extrusions with other materials. These containers hold amounts of products ranging from ounces to pounds, and are usually closed or sealed with a film heat sealed across the top of the container or a snap-on lid with or without a ribbon of plastic to seal around the edges. Other packaging configurations include flexible bags or pouches made of various plastics either in pre-made bag form or in-line. The barrier properties of these materials can be modified in many ways including controlled leakage, microporosity, micro or macro perforations or other intentional or inherent leakage. Depending on the size of the bag, ounces to tons of perishables may be packaged according to this invention. Bags may be sealed by folding, twist-tying or heat sealing. Other means of controlling gas exchange include differential permeability of the package or container whereby the packaging materials do not have any intentional holes or leaks, but exchange gases according to the permeability or gas transmission properties of the materials employed. For larger scale applications of this invention in storage or transportation modes, suitable containers include existing CA storage rooms, ocean or over-the-road transportation containers or palletized configurations where a full pallet of perishables is enclosed within a plastic bag or suitable shroud. An example of a package which may be used in the method of the present invention is the TECTROL™ pallet bag system, commercially available from TransFresh Corporation, Salinas, California.

The following examples are intended to be illustrative, and not limiting, of the present invention.

## Example 1

### Experimental Setup

Whole cantaloupe and seedless watermelon were surface sanitized using manual washing and scrubbing with antimicrobial soap followed by a 200 ppm chlorine-in-water dip/rinse for 1 minute. These melons were then hand peeled and cut into 19-2,54 cm (3/4 to inch) size pieces with sanitized knives. 113 g (Four ounces) each of the cut cantaloupe and watermelon (total 226g (8 ounces) were weighed into plastic PVC cups laminated with a polybutyl peelable seal layer (from MAP Systems, Chicago, Ill.). These cups were 12 cm tall, with a 10.7 cm diameter opening. After filling, the cups were divided into 3 treatment groups: 1) 25-30% $CO_2$, balance air gas flush (MAP 3-C); 2) 50-55% $CO_2$, balance air gas flush (MAP 5-C); and 3) 70-75% $CO_2$, balance air gas flush (MAP 6-C). The cups were then sealed according to the above treatments with a micro-perforated lidding film supplied by P-Plus, a division of Amcor Inc. The gas flush, sealing packaging machine was a MAP Systems MS-55 (with vacuum). The P-Plush lidding material (52LD80 368 mm) was made of a polyester-to-polyethylene laminate material with an average of 5 micro-perforations per impression/lid. According to P-Plus test, the measured OTR (oxygen transmission rate) of this film is 419 cc of oxygen per package per day. The OTR of the cup material is unknown and believed to be negligible relative to the OTR of the micro-perforated lidding material. All sample cups were then stored at 7,2°-7,8°C (45-46°F) until the evaluations on days 3 and 7.

### Results and Conclusions

As summarized in Table 1, the initial $CO_2$ levels dissipate rapidly due to the high OTR of the micro-perforated lidding film. Regardless, day 3 $CO_2$ and oxygen levels correlate with the initial $CO_2$ gas flush levels. It has been observed in this research that, depending on the initial microbial load, the $CO_2$ and oxygen levels become increasingly influenced over time by the rate of microbial growth and the generation of $CO_2$ and consumption of $O_2$ related to that microbial growth. Consequently, by day 7 it can be seen that the $CO_2$ and $O_2$ levels are no longer positively correlated with the initial gas flush level, but more closely related to the degree of microbial growth and resulting spoilage.

The microbial counts in Table 2 show the typical response of microbial spoilage floras to the increasing levels of $CO_2$. By day 7 these differences have diminished as a consequence of the relatively high initial counts. It has been noted in the course of this work that the lower the initial counts, the longer the inhibition of microbial growth and corresponding shelf life with higher initial $CO_2$ levels. Preferred initial counts are below about 1000 and preferably below about 500.

Regardless of the higher than optimal initial microbial counts it can be seen in Table 3 that off flavor was not a significant problem on day 3, and the quality of the fruit on day 7 was best with the highest initial $CO_2$. Based on previous work, without MAP or with conventional MAP (<=20% $CO_2$), the cut cantaloupe and watermelon would have been spoiled (acceptability =1) between days 3 and 5 at 7,2°C (45°F) due to the moderately high initial microbial counts.

Table 1

| Treatment | Initial | | Day 3 | | Day 7 | |
|---|---|---|---|---|---|---|
| (% $CO_2$) | $CO_2$ | $O_2$ | $CO_2$ | $O_2$ | $CO_2$ | $O_2$ |
| 25-30 | 28.6 | 13.9 | 5.6 | 17.3 | 17.7 | 7.4 |
| 55-60 | 57.8 | 8.0 | 9.0 | 16.9 | 17.8 | 11.5 |
| 70.75 | 73.4 | 5.0 | 11.4 | 16.4 | 15.4 | 8.8 |

Table 2

| Treatment | Average Initial | | Day 3 | | Day 7 | |
|---|---|---|---|---|---|---|
| (% $CO_2$) | *TPC | **LAC | TPC | LAC | TPC | LAC |
| 25-30 | 30,500 | 3,916 | 21,000,000 | 5,333,333 | 1,266,666,666 | 348,333,333 |
| 55-60 | 30,500 | 3,916 | 8,766,666 | 4,130,000 | 1,353,333,333 | 340,000,000 |
| 70-75 | 30,500 | 3,916 | 5,933,333 | 2,610,000 | 1,068,333,333 | 380,000,000 |

\* Total aerobic bacteria plate count CFU/gram (combined cantaloupe and watermelon)
\*\*Lactic acid bacteria count (combined cantaloupe and watermelon)

Table 3

| Treatment | Day 3 Off-Flavor | | Day 7 *Acceptability | |
|---|---|---|---|---|
| (% $CO_2$) | CAN | I WM | CAN | WM |
| 25-30 | **4.3 | 4.2 | ***2.4 | 3.0 |
| 55-60 | 4.0 | 3.3 | 2.9 | 2.7 |
| 70-75 | 4.2 | 3.8 | 3.9 | 3.1 |

\* Acceptability - average of flavor, odor, color and texture observations
\*\* 5 = no off-flavor, 4 = trace, 3 = slight, 2 = moderate, 1 = severe
\*\*\*5 = fresh, 4 = good, 3 = marginal, 2= unacceptable, 1 = spoiled

## Example 2

### Experimental Setup

Whole cantaloupe melons were surface sanitized using a steam (Thermal Surface Pasteurization) process. These melons were then hand peeled and cut into 1,9-2,54 cm (3/4 to 1 inch) size pieces with sanitized knives. 227g (eight ounces) of the cut cantaloupe were weighed into plastic PVC cups laminated with a polybutyl, peelable seal layer (from MAP Systems, Chicago, Ill.). These cups were 12 cm tall, with a 10,7 cm diameter opening. After filling, the cups were divided into 4 treatments: 1) no initial gas flush but with the same film seal as the other treatments such that a passive modified atmosphere could develop; 2) an initial $CO_2$-only gas flush (averaging 23.4% $CO_2$, balance air); 3) an initial, moderately high $CO_2$ gas flush (averaging 47% $CO_2$, balance air); and 4) an initial higher $CO_2$ gas flush (averaging 74.5% $CO_2$, balance air). The cups were then sealed according to the above treatments with a micro-perforated lidding film supplied by P-Plus, a division of Amcor Inc. The gas flush, sealing packaging machine was a MAP Systems MS-55 (with vacuum). The P-Plus lidding material (52LD50 368 mm) was made of a 53$\mu$m (2.08 mil) polyester to polyethylene laminate base material with an average of 2-3 64-micron perforations per impressionl/lid as measured during this experiment. According to P-Plus tests, the measured oxygen transmission rate (OTR) of this film would be 167-251 cc of oxygen per package per day. The OTR of the cup material is unknown and believed to be negligible relative to the OTR of the micro-perforated lidding material. All sample cups were then stored at 7,2-7,8°C (45-46°F) until the evaluations on days 3,7, 10, 14 and 17.

**Results and Conclusions**

This example clearly demonstrates the shelf life extending benefits of increasingly high initial $CO_2$ flushing in combination with a sufficiently gas permeable container for fresh cut cantaloupe at about 7,8°C (46°F). The shelf life observed in this example and others extends well beyond that heretofore reported for fresh cut melons at 7,8°C (46°F) (or, for that matter, at 2,2°C (36°F). While some noticeable $CO_2$ induced off-flavor and off-odor is temporarily detectable, this issue can be managed commercially by applying the appropriate rate of $CO_2$ dissipation to facilitate the return of normal flavor and odor by the time of the earliest anticipated consumer consumption. This allows for longer distribution times, broader market serve and better economies of scale for a given fresh cut fruit facility, combined with a consistently more pleasurable eating experience for the consumer.

As shown in Table 4, initial microbial counts were low which enhances the shelf life extending benefits of high $CO_2$ flushing.

Table 4 - Initial headspace gases and microbial counts

| Initial Treatment (% $CO_2$) | Initial Average | | Initial Average | |
|---|---|---|---|---|
| | $CO_2$ | $O_2$ | Yeast & Mold Count | Total Aerobic Plate Count |
| None | 0.0 | 20.9 | 0.0 | 92.0 |
| 25 | 23.4 | 15.2 | 0.0 | 92.0 |
| 50 | 47.0 | 10.2 | 0.0 | 92.0 |
| 75 | 74.5 | 4.1 | 0.0 | 92.0 |

Table 5 shows the enhanced reduction in the growth (and/or death) of spoilage organisms after 3 days with increasing initial headspace $CO_2$. The difference in microbial count between no initial $CO_2$ flush and 75% $CO_2$ is a full order of magnitude (1 log reduction).

Table 5 - Headspace gases and microbial counts after 3 days at 7,2°C (46°F)

| Initial Treatment (% $CO_2$) | Average | | | |
|---|---|---|---|---|
| | $CO_2$ | $O_2$ | Yeast & Mold Count | Total Aerobic Plate Count |
| None | 9.1 | 13.4 | 10.0 | 2122.0 |
| 25 | 17.5 | 11.9 | 9.0 | 658.0 |
| 50 | 20.4 | 13.0 | 10.0 | 400.0 |
| 75 | 25.8 | 12.7 | 10.0 | 230.0 |

Table 6 reflects slight (temporary) increases in off-odor and off-flavor with increasing initial $CO_2$ levels; there were no unacceptable scores after 3 days. It is to be noted that if the lidding film had had a slightly higher oxygen transmission rate, the $CO_2$ level at 3 days would have been slightly lower and there would not have been the slightly elevated odor/flavor scores. This is a good example of how the packaging materials can be manipulated by one skilled in the art to achieve optimum results in the present invention.

Table 6 - Sensory scores after 3 days at 7,2°C

| Initial Treatment (%$CO_2$) | *Avg. Off Odor | *Avg Off Flavor | **Avg Texture (Crispness) | *Avg. Off Color | ***Avg. Acceptability |
|---|---|---|---|---|---|
| None | 4.5 | 4.5 | 4.5 | 4.5 | 4.5 |
| 25 | 4.2 | 4.4 | 4.5 | 4.5 | 4.4 |
| 50 | 4.3 | 4.4 | 4.5 | 4.5 | 4.4 |
| 75 | 4.0 | 4.2 | 4.5 | 4.5 | 4.3 |
| * 5 = no off-flavor, off-odor or off-color, 4 = trace, 3 = slight, 2 = moderate, 1 = severe<br>** 5 = crisp, 4 = firm, 3 =slightly soft, 2 = soft, 1 = mushy<br>***5 = fresh, 4 = good, 3 = marginal, 2 = unacceptable, 1 = spoiled | | | | | |

The odor/flavor grades are determined by an expert evaluator who smells and tastes blind three samples from each package and assigns a numerical grade on the 1-5 scale. The numbers in the tables are the arithmetic mean of those three scores. The microbiological procedure for quantifying total aerobic bacteria, yeast and mold herein are known in the art and, for example, can be done as follows:

1. Weigh the entire contents of a package (6 oz. to 24 oz. size packages) of fresh cut fruit/produce.
2. Aseptically put the entire package contents (cut fruit) into a sterile stomacher bag with 225 ml. of sterile Butterfields buffer.
3. Seal and place the stomacher bag in the stomacher and stomach/homogenate on "high" for 2 minutes.
4. Serially dilute the sample up to a $10^{-8}$ dilution by aseptically extracting, using a sterile pipette 1 ml. of homogenate into a test tube containing 9 ml. of sterile Butterfields buffer. Mix thoroughly and continue to dilute from each successively diluted sample to obtain $10^{-8}$ as the most diluted sample. 1. Place 1 ml. from each of (at least) 5 dilutions (using dilutions estimated (based on experience) to result in plates that grow 25-250 colonies per plate) on (at least) 1 plate each of 3M PETRIFILM™ aerobic plate count (APC) and yeast and mold (Y&M) plates (if counting yeast and molds).
6. Incubate the APC plates for 48 hours at 35°C and the Y&M plates for 3-5 days at 21-25°C.
7. Count and record the number of colonies per plate.
8. Calculate the number of microorganisms per gram of sample using the following formula to determine the average number of colony-forming units (CFU) per gram of original sample:

$$\text{CFU/g} = \text{actual count} \times \text{1/dilution} \times \text{(weight of sample + 225)/weight of sample.}$$

Table 7 shows the enhanced reduction in the growth (and/or death) of aerobic spoilage organisms after 7 days with increasing initial headspace $CO_2$. The difference in microbial count between no initial $CO_2$ flush and 75% $CO_2$ has increased to nearly two orders of magnitude (2 log reduction).

Table 7 Headspace gases and microbial counts after 7 days at 7,2°C (46°F)

| Initial Treatment (%$CO_2$) | Average | | | |
|---|---|---|---|---|
| | $CO_2$ | $O_2$ | Yeast & Mold Count | Total Aerobic Plate Count |
| None | 7.8 | 15.2 | 13.3 | 125800.0 |
| 25 | 11.5 | 14.3 | 10.0 | 12160.0 |
| 50 | 14.7 | 14.3 | 30.0 | 12540.0 |
| 75 | 14.9 | 14.4 | 15.0 | 3820.0 |

Table 8 reflects little difference between treatments in perceived freshness after 7 days at 7,2°C (46°F)

Table 8 - Sensory scores after 7 days at 7,2°C (46°F)

| Initial Treatment (% $CO_2$) | *Avg Off Odor | *Avg. Off Flavor | **Avg. Texture (Crispness) | *Avg Off Color | ***Avg. Acceptability |
|---|---|---|---|---|---|
| None | 4.3 | 4.3 | 4.0 | 4.5 | 4.3 |
| 25 | 4.5 | 4.5 | 4.4 | 4.5 | 4.5 |
| 50 | 4.1 | 4.1 | 4.2 | 4.5 | 4.2 |
| 75 | 4.3 | 4.5 | 4.5 | 4.5 | 4.4 |

Table 9 shows again the enhanced reduction in the growth (and/or death) of aerobic spoilage organisms and yeast and mold after 7 days, with increasing initial headspace $CO_2$, after 10 days. It is interesting to note that although the headspace gases are not very different after the third day, the benefits of the initial $CO_2$ remain in proportion to the initial levels.
Table 9 - Headspace gases and microbial counts after 10 days at 7,2°C (46°F)

| Initial Treatment (% $CO_2$) | Average | | | |
|---|---|---|---|---|
| | $CO_2$ | $O_2$ | Yeast & Mold Count | Total Aerobic Plate Count |
| None | 6.7 | 16.2 | 10021.8 | 632000.0 |
| 25 | 11.2 | 13.6 | 329.6 | 137800.0 |
| 50 | 15.3 | 13.2 | 9.2 | 76600.0 |
| 75 | 15.4 | 13.6 | 81.4 | 39000.0 |

Table 10 reflects a trend of increasing perceived freshness with increasing initial $CO_2$ levels after 10 days at 7,2°C (46°F). However, the very low initial microbial counts are also providing extended shelf life for all treatments so far.
Table 10 - Sensory scores after 10 days at 7,2°C

| Initial Treatment (% $CO_2$) | *Avg. Off Odor | *Avg. Off Flavor | **Avg. Texture (Crispness) | *Avg. Off Color | *** Avg. Acceptability |
|---|---|---|---|---|---|
| None | 4.0 | 4.1 | 4.1 | 4.5 | 4.2 |
| 25 | 4.4 | 4.4 | 4.4 | 4.5 | 4.4 |
| 50 | 4.3 | 4.2 | 4.2 | 4.5 | 4.3 |
| 75 | 4.5 | 4.5 | 4.5 | 4.5 | 4.5 |

Table 11 reflects a more obvious trend of increasing perceived freshness with increasing initial $CO_2$ levels after 14 days at 7,2°C (46°F). The treatment with no initial $CO_2$ gas flush is judged to have fallen to a marginal degree of freshness.
Table 11- Sensory scores after 14 days 7.2°C (46°F)

| Initial Treatment (% $CO_2$) | *Avg. Off Odor | *Avg. Off Flavor | **Avg. Texture (Crispness) | *Avg. Off Color | ***Avg. Acceptability |
|---|---|---|---|---|---|
| None | 3.6 | 3.5 | 3.7 | 4.0 | 3.7 |
| 25 | 4.0 | 4.2 | 4.3 | 4.5 | 4.2 |
| 50 | 4.0 | 4.2 | 4.3 | 4.5 | 4.3 |
| 75 | 4.0 | 4.5 | 4.4 | 4.5 | 4.4 |

Table 12 shows how many samples from each treatment had no visible defects after 17 days at 7.2°C (46°F)
Table 12 - Percent of samples visually marketable (out of 20 to 22 remaining) after 17 days at 7.2°C (46°F)

| Initial Treatment (% $CO_2$) | Percent Marketable |
|---|---|
| None | 12.0 |
| 25 | 90.0 |
| 50 | 95.0 |
| 75 | 95.0 |

Table 13 shows average sensory scores for samples that had not been declared unmarketable due to visible defects. As shown in Table 12, only 12% of the samples from the treatment with no initial $CO_2$ flush were without visible defects (obvious signs of spoilage). The two highest initial $CO_2$ treatments had the least unmarketable number of samples.
Table 13 Sensory scores after 17 days at 7.2 °C (46°F)

| Initial Treatment (% $CO_2$) | *Avg. Off Odor | *Avg Off Flavor | **Avg. Texture (Crispness) | *Avg. Off Color | ***Avg. Acceptability |
|---|---|---|---|---|---|
| None | 3.4 | 3.4 | 3.5 | 3.5 | 3.4 |
| 25 | 4.0 | 4.3 | 4.2 | 4.3 | 42 |
| 50 | 4.1 | 4.3 | 4.3 | 4.4 | 4.3 |
| 75 | 4.0 | 4.3 | 4.3 | 4.3 | 4.2 |

**Claims**

1.  A process for packaging perishable fresh cut produce comprising the steps of:

    (a) placing said food items in a package at least a portion of which is gas permeable; and
    (b) adding an antimicrobial gas into said package at a level of from 30% to 100% of the atmosphere contained within the package;

    wherein said package has a permeability such that the atmosphere in the package equilibrates with the atmospheric gas composition in 1 to 7 days from the time the antimicrobial gas is added to the package, at from -2,2°C (28°F) to 100°C (212°F)

2.  The process according to claim 1 wherein the perishable fresh cut produce is respiring produce.

3. The process according to claim 1 wherein the perishable fresh cut produce comprise low acid fruit.

4. The process according to claim 1 wherein the atmosphere in the package equilibrates with the atmospheric gas composition in from 1 to 7 days at from 0°C (32°F) to about 10°C (50°F).

5. The process according to claim 3 wherein the low acid fruit is selected from watermelon, cantaloupe, honeydew, and mixtures thereof.

6. The process according to claim 1 wherein the antimicrobial gas is selected from carbon dioxide, chlorine oxide, ozone, nitrous oxide, carbon monoxide, ethanol, peroxide, and mixtures thereof.

7. The process according to claim 6 wherein the antimicrobial gas comprises carbon dioxide.

8. The process according to claim 7 wherein the final concentration of the antimicrobial gas after equilibration is no more than 25% of the atmosphere contained within the package.

9. The process according to claim 8 wherein the final concentration of the antimicrobial gas is no more than 20% of the atmosphere contained within the package.

10. The process according to claim 8 wherein the equilibration of the antimicrobial gas takes from 1 to 5 days.

11. The process according to claim 8 wherein the equilibration of the antimicrobial gas takes from 2 to 4 days.

12. The process according to claim 11 wherein the equilibration takes place at a temperature of from 7,2°C (45) to 7,8°C (46°F).

13. The process according to claim 9 wherein the initial concentration of carbon dioxide is about 75% of the atmosphere contained within the package, and said antimicrobial gas equilibrates to contain about 15% to about 20% carbon dioxide within 2 to 4 days.

14. The process according to claim 13 wherein the equilibration takes 3 days.

15. The process according to claim 10 wherein the initial concentration of the antimicrobial gas is 40% to 100% of the atmosphere contained within the package.

16. The process according to claim 15 wherein the initial concentration of the antimicrobial gas is from 50% to 100% of the atmosphere contained within the package.

17. The process according to claim 4 wherein the antimicrobial gas is introduced into the package by vacuum back flush, injection, or permeation.

18. The process according to claim 4 wherein the produce is subjected to a sanitization step before being cut up.

19. The process according to claim 18 wherein the sanitization step is selected from irradiation, washing, antimicrobial dip and thermal sanitization of the produce, or a combination of such steps.

20. The process according to claim 4 wherein the equilibration of the atmosphere within the package is controlled by perforations in the packaging materials, gas permeability of the packaging materials, or a controlled atmosphere room or container within which the packages are stored.

21. The process according to claim 20 wherein the atmosphere equilibration is controlled by perforations in the packaging materials or gas permeability of the packaging materials.

22. The process according to claim 21 wherein the packaging materials are, in whole or in part, microporous, microperforated, or a combination of the two.

**EP 1 608 241 B1**

**Patentansprüche**

1. Verfahren zum Verpacken verderblicher, frisch geschnittener Produkte, umfassend die Folgenden Schritte:

   (a) Platzieren der Nahrungsmiteleinheiten in einer Verpackung, von der wenigstens ein Teil gasdurchlässig ist; und
   (b) Zugeben eines antimikrobiellen Gases in die Verpackung mit einer Konzentration von 30 % bis 100 % der in der Verpackung enthaltenen Atmosphäre;

   wobei die Verpackung eine derartige Permeabilität aufweist, dass die Atmosphäre in der Verpackung bei -2,2 °C (28 °F) bis 100 °C (212 °F) innerhalb von 1 bis 7 Tagen von dem Zeitpunkt, zu dem das antimikrobielle Gas zu der Verpackung zugegeben wird, mit der atmosphärischen Gaszusammensetzung äquilibriert.

2. Verfahren gemäß Anspruch 1, wobei das verderbliche, frisch geschnittene Produkt ein atmendes Produkt ist.

3. Verfahren gemäß Anspruch 1 wobei das verderbliche, frisch geschnittene Produkt Früchte mit niedrigem Säuregehalt umfasst.

4. Verfahren gemäß Anspruch 1, wobei die Atmosphäre in der Verpackung bei 0 °C (32 °F) bis 10 °C (50 °F) innerhalb von 1 bis 7 Tagen mit der atmosphärischen Gaszusammensetzung äquitibriert.

5. Verfahren gemäß Anspruch 3, wobei die Früchte mit niedrigem Säuregehalt ausgewählt sind aus Wassermelone, Cantaloupe-Melone, Honigmelone und Gemischen davon.

6. Verfahren gemäß Anspruch 1, wobei das antimikrobielle Gas ausgewählt ist aus Kohlendioxid, Chloroxid, Ozon, Distickstoffoxid, Kohlenmonoxid, Ethanol, Peroxid und Gemischen davon.

7. Verfahren gemäß Anspruch 6, wobei das antimikrobielle Gas Kohlendioxid umfasst.

8. Verfahren gemäß Anspruch 7, wobei die Endkonzentration des antimikrobiellen Gases nach dem Äquilibrieren nicht mehr als 25 % der in der Verpackung enthaltenen Atmosphäre beträgt.

9. Verfahren gemäß Anspruch 8, wobei die Endkonzentration des antimikrobiellen Gases nach dem Äquilibrieren nicht mehr als 20 % der in der Verpackung enthaltenen Atmosphäre beträgt.

10. Verfahren gemäß Anspruch 8, wobei das Äquilibrieren des antimikrobiellen Gases 1 bis 5 Tage erfordert.

11. Verfahren gemäß Anspruch 8, wobei das Äquilibrieren des antimikrobiellen Gases 2 bis 4 Tage erfordert.

12. Verfahren gemäß Anspruch 11, wobei das Äquilibrieren bei einer Temperatur von 7,2 °C (45 °F) bis 7,8 °C (46°F) erfolgt.

13. Verfahren gemäß Anspruch 9, wobei die Anfangskonzentration von Kohlendioxid etwa 75 % der in der Verpackung enthaltenen Atmosphäre beträgt und das antimikrobielle Gas innerhalb von 2 bis 4 Tagen auf einen Gehalt von etwa 15 % bis etwa 20 % Kohlendioxid äquilibriert.

14. Verfahren gemäß Anspruch 13, wobei das Äquilibrieren 3 Tage erfordert.

15. Verfahren gemäß Anspruch 10, wobei die Anfangskonzentration des antimikrobiellen Gases 40 % bis 100 % der in der Verpackung enthaltenen Atmosphäre beträgt.

16. Verfahren gemäß Anspruch 15, wobei die Anfangskonzentration des antimikrobiellen Gases 50 % bis 100 % der in der Verpackung enthaltenen Atmosphäre beträgt.

17. Verfahren gemäß Anspruch 4, wobei das antimikrobielle Gas durch Unterdruck-Rückspülung, Injektion oder Permeation in die Verpackung eingeführt wird.

18. Verfahren gemäß Anspruch 4, wobei das Produkt vor dem Schneiden einem Desinfektionsschritt unterzogen wird.

**19.** Verfahren gemäß Anspruch 18, wobei der Desinfektionsschritt ausgewählt ist aus Bestrahlung, Waschen, antimikrobiellem Tauchen und Wärmedesinfizieren des Produkts oder einer Kombination derartiger Schritte.

**20.** Verfahren gemäß Anspruch 4, wobei das Äquilibrieren der Atmosphäre in der Verpackung durch Perforationen in dem Verpackungsmaterial, Gaspermeabilität des Verpackungsmaterials oder einen Raum oder Behälter mit kontrollierter Atmosphäre, worin die Verpackung gelagert wird, kontrolliert wird.

**21.** Verfahren gemäß Anspruch 20, wobei das Äquilibrieren der Atmosphäre durch Perforationen in dem Verpackungsmaterial oder Gaspermeabilität des Verpackungsmaterials kontrolliert wird.

**22.** Verfahren gemäß Anspruch 21, wobei die Verpackungsmaterialien im Ganzen oder teilweise mikroporös, mikroperforiert oder eine Kombination der beiden sind.

## Revendications

**1.** Procédé d'emballage de produits périssables fraîchement cueillis comprenant les étapes consistant à :

(a) placer lesdits articles alimentaires dans un emballage dont au moins une portion est perméable aux gaz ; et
(b) ajouter un gaz antimicrobien dans ledit emballage à un taux de 30 % à 100 % de l'atmosphère contenue dans l'emballage ;

où ledit emballage présente une perméabilité telle que l'atmosphère dans l'emballage s'équilibre avec la composition de gaz atmosphérique en 1 à 7 jours à partir du moment où le gaz antimicrobien est ajouté dans l'emballage, à une température de -2,2 °C (28 °F) à 100 °C (212 °F).

**2.** Procédé selon la revendication 1, dans lequel le produit périssable fraîchement cueilli est un produit respirant.

**3.** Procédé selon à revendication il dans lequel le produit périssable fraîchement cueilli comprend un fruit faiblement acide.

**4.** Procédé selon la revendication 1, dans lequel l'atmosphère dans l'emballage s'équilibre avec la composition de gaz atmosphérique en 1 à 7 jours à une température de 0 °C (32 °F) à 10°C (50 °F).

**5.** Procède selon la revendication 3, dans lequel le fruit faiblement acide est choisi parmi la pastèque, le melon cantaloup, le melon miel, et leurs mélanges.

**6.** Procédé selon la revendication 1, dans lequel le gaz antimicrobien est choisi parmi le dioxyde de carbone, l'oxyde de chlore, l'ozone, l'oxyde nitreux, le monoxyde de carbone, l'éthanol, un peroxyde, et leurs mélanges.

**7.** Procédé selon la revendication 6, dans lequel le gaz antimicrobien comprend du dioxyde de carbone.

**8.** Procédé selon la revendication 7, dans lequel la concentration finale du gaz antimicrobien après équilibrage n'est pas supérieure à 25 % de l'atmosphère contenue au sein de l'emballage.

**9.** Procédé selon la revendication 8, dans lequel la concentration finale du gaz antimicrobien n'est pas supérieure à 20 % de l'atmosphère contenue au sein de l'emballage.

**10.** Procédé selon la revendication 8, dans lequel l'équilibrage du gaz antimicrobien prend 1 à 5 jours.

**11.** Procédé selon la revendication 8, dans lequel l'équilibrage du gaz antimicrobien prend 2 à 4 ours.

**12.** Procédé selon la revendication 11, dans lequel l'équilibrage a lieu à une température de 7,2 °C (45 °F) à 7,8 °C (46 °F).

**13.** Procédé selon la revendication 9, dans lequel la concentration initiale de dioxyde de carbone est d'environ 75 % de l'atmosphère contenue au sein de l'emballage, et ledit gaz antimicrobien s'équilibre pour contenir environ 15 % à environ 20 % de dioxyde de carbone en 2 à 4 jours.

**14.** Procédé selon la revendication 13, dans lequel l'équilibrage prend 3 jours.

**15.** Procédé selon la revendication 10, dans lequel la concentration initiale du gaz antimicrobien est de 40 % à 100 % de l'atmosphère contenue au sein de l'emballage.

**16.** Procédé selon la revendication 15, dans lequel la concentration initiale du gaz antimicrobien est de 50 % à 100 % de l'atmosphère contenue au sein de l'emballage.

**17.** Procédé selon la revendication 4, dans lequel le gaz antimicrobien est introduit dans l'emballage par rinçage en circulation inverse sous vide, injection ou perméation.

**18.** Procédé selon la revendication 4, dans lequel le produit est soumis à une étape de désinfection avant d'être découpé.

**19.** Procédé selon la revendication 18, dans lequel l'étape de désinfection est choisie parmi une irradiation, un lavage, un trempage antimicrobien et une désinfection thermique du produit, ou une combinaison de ces étapes.

**20.** Procédé selon la revendication 4, dans lequel l'équilibrage de l'atmosphère au sein de l'emballage est régulé par des perforations dans les matériaux d'emballage, une perméabilité aux gaz des matériaux d'emballage, ou une salle ou un contenant à atmosphère régulée dans lequel sont stockés les emballages.

**21.** Procédé selon la revendication 20, dans lequel l'équilibrage de l'atmosphère est régulé par des perforations dans les matériaux d'emballage ou une perméabilité aux gaz des matériaux d'emballage.

**22.** Procédé selon la revendication 21, dans lequel les matériaux d'emballage sont, en totalité ou en partie, microporeux, microperforés, ou une combinaison des deux.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 44298003 P
- US 50306203 P
- US 5565230 A
- JP 2000197447 A
- EP 0414451 A
- US 6451363 B
- EP 0356161 A
- JP 4094641 A
- US 6190710 B